# EUROPEAN PATENT APPLICATION

(11) **EP 4 844 538 A1**
(43) Date of publication of application: **25.11.2026**
(21) Application number: 25741777.4
(22) Date of filing: 09.01.2025
(51) Int. Cl.: G06F 3/01, G05G 1/02, G05G 5/03, G05G 25/00

(54) **VIBRATION DEVICE AND VIBRATION SYSTEM**

(30) Priority: 15.01.2024 JP 2024004170
(71) Applicant: Kyocera Corporation, Kyoto-shi, Kyoto 612-8501 (JP)
(72) Inventor: SUZUKI, Takashi, Kyoto-shi, Kyoto 612-8501 (JP)
(74) Representative: Viering, Jentschura & Partner mbB Patent- und Rechtsanwälte
(86) International application number: PCT/JP2025/000534
(87) International publication number: WO 2025/154645

(57) **Abstract**

A vibration apparatus comprises at least one vibrator. The vibrator is configured to apply vibration to a body part of a user. The vibrator is configured to vibrate with an intensity of vibration changed according to the body part to which the vibration is applied.

## Description

### CROSS-REFERENCE TO RELATED APPLICATIONS

This application claims priority to Japanese Patent Application No. 2024-004170 filed in Japan on January 15, 2024, the entire disclosure of which is incorporated herein by reference.

### TECHNICAL FIELD

The present disclosure relates to a vibration apparatus and a vibration system.

### BACKGROUND OF INVENTION

Conventionally, technology related to improvement of sensory sensitivity utilizing a stochastic resonance phenomenon is known. Hereinafter, sensory sensitivity includes tactile sensitivity and somatosensory sensitivity. For example, Patent Literature 1 discloses a method in which a vibration pad that provides weak vibration is attached to an upper surface of a brake pedal to improve sensitivity of tactile sensation of a sole of a driver's foot in response to decelerating a vehicle, thereby enabling improvement of brake operation compared to conventional methods.

### CITATION LIST

### PATENT LITERATURE

Patent Literature 1: Japanese Patent Application Laid-Open No. 2017-138764

### SUMMARY

A vibration apparatus according to a first aspect comprises:
at least one vibrator configured to apply vibration to a body part of a user,
wherein the vibrator is configured to vibrate with an intensity of vibration changed according to the body part to which the vibration is applied.

A vibration system according to a second aspect comprises:
a vibration apparatus comprising at least one vibrator configured to apply vibration to a body part of a user; and
a control apparatus configured to vibrate the vibration apparatus with an intensity of vibration changed according to the body part.

### BRIEF DESCRIPTION OF THE DRAWINGS

[FIG. 1] A schematic diagram of a measurement apparatus configured to measure vibration intensity according to a body part in the present disclosure.
[FIG. 2] An external view of a vibration apparatus according to a first embodiment of the present disclosure.
[FIG. 3] A functional block diagram illustrating a configuration of a control apparatus of FIG. 2.
[FIG. 4] A flowchart for explaining vibration processing executed by an processor of FIG. 3.
[FIG. 5] An external view of a vibration apparatus according to a second embodiment of the present disclosure.
[FIG. 6] A functional block diagram illustrating a configuration of a control apparatus of FIG. 5.
[FIG. 7] A flowchart for explaining vibration processing executed by an processor of FIG. 6.
[FIG. 8] An external view of a vibration apparatus according to a third embodiment of the present disclosure.
[FIG. 9] A functional block diagram illustrating a configuration of a control apparatus of FIG. 8.
[FIG. 10] A flowchart for explaining vibration processing executed by an processor of FIG. 9.
[FIG. 11] An external view of a vibration apparatus according to a fourth embodiment of the present disclosure.
[FIG. 12] A functional block diagram illustrating a configuration of a control apparatus of FIG. 11.
[FIG. 13] A flowchart for explaining vibration processing executed by an processor of FIG. 12.
[FIG. 14] A graph displaying optimal vibration intensity for each body part in a motor function confirmation test.

### DESCRIPTION OF EMBODIMENTS

Conventionally, a stochastic resonance phenomenon is known in which, in a nonlinear system such as a bistable system and a threshold system, by adding weak noise below a threshold to a signal, a probability that the signal exceeds the threshold and becomes stronger increases, and an ability to detect a weak signal is enhanced. As an example, it is known that tactile sensitivity of a part of a human body including a finger, a hand, and a foot is improved by applying weak vibration to an extent that a user does not feel. It is also known that improvement of tactile sensitivity causes improvement of motor function for non-therapeutic purposes in which feedback control is performed using tactile information.

According to the method described in Patent Literature 1, tactile sensitivity of a driver is improved by weak vibration. This is a fact known as a stochastic resonance phenomenon. However, Patent Literature 1 does not disclose a method for effectively manifesting a stochastic resonance phenomenon according to a body part that performs a motor function. The present disclosure relates to improvement of motor function for non-therapeutic purposes based on sensory sensitivity utilizing a stochastic resonance phenomenon.

Hereinafter, embodiments of the present disclosure will be described with reference to the drawings. In components illustrated in the following drawings, the same reference signs are assigned to the same components.

As will be described in Examples described later, vibration intensity that effectively manifests a stochastic resonance phenomenon (hereinafter, also referred to as "intensity of vibration") differs according to a body part of a human body. The vibration intensity to be stored in the vibration apparatus of each embodiment of the present disclosure may be commonly measured by the following measurement apparatus.

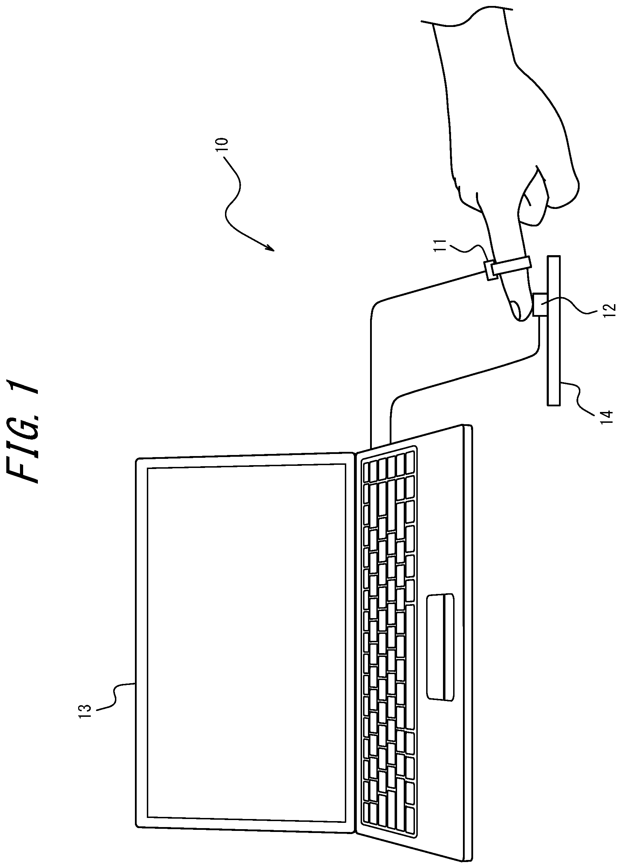

As illustrated in FIG. 1, a measurement apparatus 10 may be configured to include a stimulation vibrator 11, a signal vibrator 12, and a terminal apparatus 13.

The stimulation vibrator 11 may be provided, for example, on a rubber ring or the like. By attaching the rubber ring to an arbitrary body part such as a finger of a subject, the stimulation vibrator 11 may apply vibration to the vibration part. The stimulation vibrator 11 is, but not limited to, for example, a piezo element, a linear vibration actuator (LRA), a speaker-type vibration element, or the like.

The signal vibrator 12 may be provided, for example, on a hard plate member 14 or the like. The signal vibrator 12 may be configured such that, in response to measuring vibration intensity, a finger on which the rubber ring provided with the stimulation vibrator 11 is attached is placed. The signal vibrator 12 is, but not limited to, for example, a piezo element, a linear vibration actuator (LRA), or the like. The plate member 14 is, for example, but not limited to, an aluminum plate, a SUS plate, or the like. The plate member 14 is, but not limited to, for example, 50 mm×50 mm with a thickness of 5 mm.

The terminal apparatus 13 is, for example, a personal computer, a tablet, or the like. The terminal apparatus 13 may include a display and an input device such as a keyboard and a mouse. The terminal apparatus 13 may vibrate the stimulation vibrator 11 with a specific vibration intensity in response to measuring vibration intensity. The specific vibration intensity may be changed by an operation on the input device of the terminal apparatus 13. The terminal apparatus 13 may vibrate the signal vibrator 12 with a specific vibration intensity in response to measuring vibration intensity. The specific vibration intensity may be changed by an operation on the input device of the terminal apparatus 13.

In response to measuring vibration intensity, in a state in which the stimulation vibrator 11 is vibrated with a constant vibration intensity, the vibration intensity of the signal vibrator 12 is gradually increased. The vibration intensity of the signal vibrator 12 in response to the subject perceiving the vibration of the signal vibrator 12 is recorded. The vibration intensity is obtainable from the terminal apparatus 13. The vibration intensity is recognized as a provisional minimum intensity for the vibration intensity at which the stimulation vibrator 11 is vibrated. Next, the vibration intensity of the stimulation vibrator 11 is changed, and similarly, the vibration intensity in response to the subject perceiving the vibration of the signal vibrator 12 is recognized as a tentative minimum intensity. In this manner, provisional minimum intensities of the signal vibrator 12 for a plurality of vibration intensities of the stimulation vibrator 11 are measured. The vibration intensity of the stimulation vibrator 11 corresponding to a minimum value among a plurality of provisional minimum intensities for the same finger is predetermined as a vibration intensity according to the finger on which the rubber ring with the stimulation vibrator 11 is attached. By attaching the rubber ring to each finger and performing similar measurement, vibration intensity according to each of a thumb, an index finger, a middle finger, a ring finger, and a little finger of, for example, a right hand or a left hand is predetermined for each user.

Next, a configuration of a vibration apparatus 15 according to each embodiment of the present disclosure will be described.

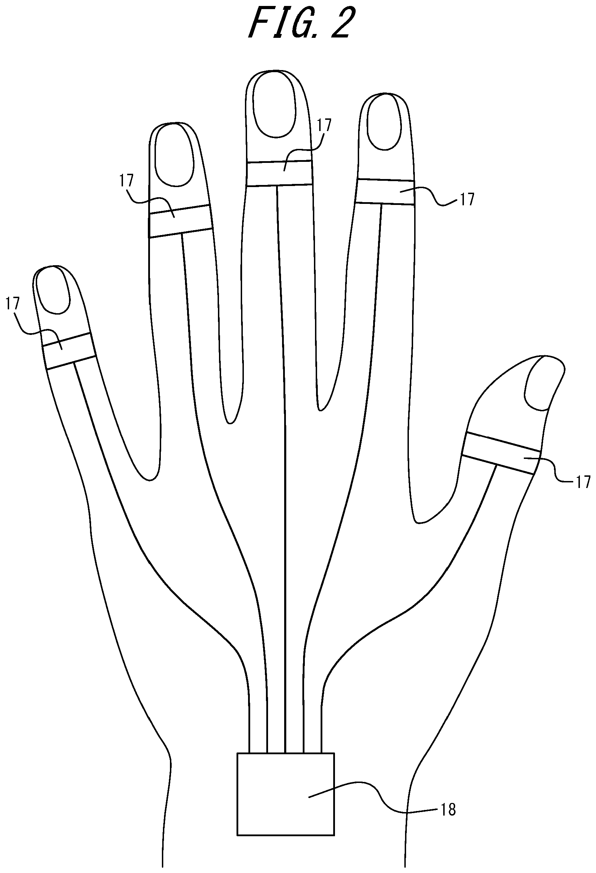

As illustrated in FIG. 2, a vibration apparatus 15 according to a first embodiment of the present disclosure may be embodied, for example, as a wearable device to be attached to a finger. The wearable device may be, for example, a glove. Alternatively, the wearable device is not limited to a glove that covers an entire finger, and may be configured to include a ring to be attached to each finger.

The vibration apparatus 15 is configured to include at least one vibrator 17. The vibration apparatus 15 may be configured to include a plurality of vibrators 17 in the wearable device. More specifically, the vibration apparatus 15 may be configured to include five vibrators 17 corresponding to all five fingers. The vibration apparatus 15 may further be configured to include a control apparatus 18.

The vibrator 17 applies vibration to a body part of a user. In the first embodiment, the body part to which the vibrator 17 applies vibration is a finger. As described above, each of the plurality of vibrators 17 is configured such that a body part to which vibration is applied, in other words, a finger, is predetermined in the wearable device. For example, the plurality of vibrators 17 are built in rings to which fingers to be attached are respectively determined, and may be positioned to be capable of applying vibration to each finger by attaching the rings to the user.

The vibrator 17 may be capable of vibrating with various intensities. The vibrator 17 may vibrate with a determined intensity based on control of the control apparatus 18 as will be described later. The determined intensity may be less than a threshold of sensation of a human body. Therefore, the vibrator 17 may apply vibration that is not perceived by the user to a body part of the user.

The vibrator 17 may be an arbitrary vibrator configured to generate weak vibration. The vibrator is, for example, a piezo element or a linear vibration actuator. The vibrator may be configured by using at least one element of one type, or may be configured by using a plurality of elements of different types.

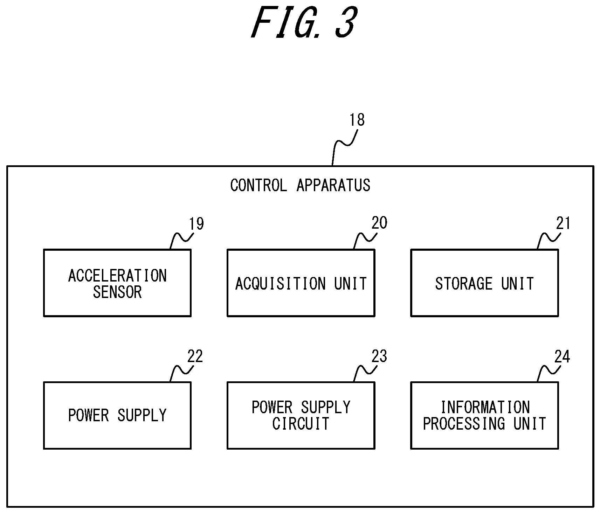

As illustrated in FIG. 3, the control apparatus 18 may include, for example, an acceleration sensor (second acceleration sensor) 19, an acquisition unit 20, a memory 21, a power supply 22, a power supply circuit 23, and an processor 24.

The acceleration sensor 19 may be capable of detecting acceleration along each of three axes determined in the control apparatus 18.

The acquisition unit 20 may acquire information. The acquisition unit 20 may be, for example, an input device configured to detect an operation input of a user such as a button. Alternatively, the acquisition unit 20 may be a communication device configured to acquire information by communicating with an information device by wire or wirelessly. The acquisition unit 20 may acquire an intensity of vibration according to a body part of a user. For example, in the first embodiment, the acquisition unit 20 may acquire, as information, an intensity of vibration for each of a thumb, an index finger, a middle finger, a ring finger, and a little finger.

The memory 21 includes an arbitrary storage device such as, for example, a RAM (Random Access Memory) and a ROM (Read Only Memory). The memory 21 may store various programs configured to cause the processor 24 to function and various information used by the processor 24. For example, the memory 21 stores, as information, an intensity of vibration according to a body part acquired by the acquisition unit 20.

The power supply 22 may supply electric power for driving the control apparatus 18. The power supply 22 is, for example, a battery. The power supply circuit 23 may adjust electric power supplied by the power supply 22 to a current value and a voltage value for driving components of the control apparatus 18 and output the adjusted electric power. Electric power may be supplied to the vibrator 17 via the power supply circuit 23.

The processor 24 is configured to include at least one processor, at least one dedicated circuit, or a combination thereof. The processor is a general-purpose processor such as a CPU (Central Processing Unit) or a GPU (Graphics Processing Unit), or a dedicated processor specialized for specific processing. The dedicated circuit may be, for example, an FPGA (Field-Programmable Gate Array), an ASIC (Application Specific Integrated Circuit), or the like. The processor 24 controls an operation of the vibration apparatus 15.

In response to an operation mode being switched to a setting mode, the processor 24 may control the acquisition unit 20 to be capable of acquiring information. For example, in a configuration in which the acquisition unit 20 includes a button, in response to a state in which the button is pressed exceeding a threshold time, the processor 24 may switch the operation mode to the setting mode. The processor 24 may store, in the memory 21, an intensity of vibration according to a body part of a user acquired by the acquisition unit 20 in the setting mode as information. The processor 24 may cancel the setting mode in response to a determined operation input to the button being performed in the setting mode.

Alternatively, in a configuration in which the acquisition unit 20 does not include a button, in response to it being estimated that the vibration apparatus 15 has been shaken five times based on acceleration detected by the acceleration sensor 19, the processor 24 may switch the operation mode to the setting mode.

The processor 24 vibrates the vibrator 17 with an intensity of vibration changed according to a body part to which vibration is applied. In the first embodiment, the processor 24 reads, from the memory 21, an intensity of vibration according to a finger corresponding to each of the plurality of vibrators 17, and vibrates each vibrator 17 with the intensity of vibration.

The processor 24 may switch vibration start and vibration stop of the vibrator 17 based on acceleration detected by the acceleration sensor 19. More specifically, the processor 24 may estimate an operation of a finger on which the wearable device is attached based on acceleration detected by the acceleration sensor 19. In response to the estimated operation being a specific operation such as, for example, playing a piano, the processor 24 may start vibration of the vibrator 17. In addition, in response to the estimated operation no longer being the specific operation, the processor 24 may stop vibration of the vibrator 17.

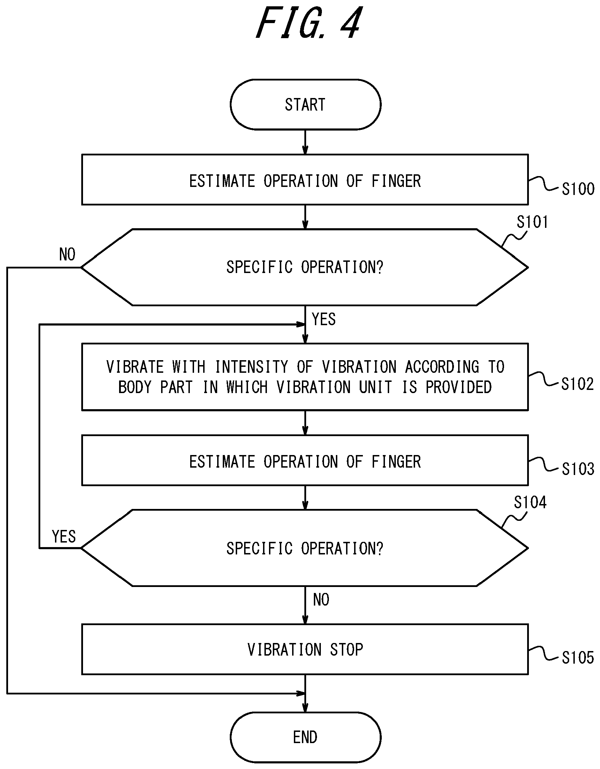

Next, vibration processing executed by the processor 24 in the first embodiment will be described using a flowchart of FIG. 4. The vibration processing starts, for example, periodically.

In step S100, the processor 24 estimates an operation of a finger based on acceleration of the vibration apparatus 15 detected by the acceleration sensor 19. After the estimation, the process proceeds to step S101.

In step S101, the processor 24 determines whether or not the operation estimated in step S100 is a specific operation. In response to the operation being the specific operation, the process proceeds to step S102. In response to the operation not being the specific operation, the vibration processing ends.

In step S102, the processor 24 reads, from the memory 21, an intensity of vibration according to a body part in which each of the plurality of vibrators 17 is provided. Further, the processor 24 starts vibration of each of the plurality of vibrators 17 with a corresponding intensity of vibration. After the vibration start, the process proceeds to step S103.

In step S103, the processor 24 estimates an operation of a finger based on acceleration of the vibration apparatus 15 detected by the acceleration sensor 19. After the estimation, the process proceeds to step S104.

In step S104, the processor 24 determines whether or not the operation estimated in step S103 is a specific operation. In response to the operation being the specific operation, the process proceeds to step S102. In response to the operation not being the specific operation, the process proceeds to step S105.

In step S105, the processor 24 stops vibration of the vibrator 17. After the stop, the vibration processing ends.

The vibration apparatus 15 of the first embodiment configured as described above comprises at least one vibrator 17 configured to apply vibration to a body part of a user, and the vibrator 17 is configured to vibrate with an intensity of vibration changed according to the body part to which the vibration is applied. With such a configuration, the vibration apparatus 15 can apply vibration to a body part to which vibration is applied with a vibration intensity that effectively manifests a stochastic resonance phenomenon. Therefore, the vibration apparatus 15 can improve motor function based on sensory sensitivity utilizing a stochastic resonance phenomenon.

In addition, in the vibration apparatus 15 of the first embodiment, the at least one vibrator 17 includes a plurality of vibrators 17, and the plurality of vibrators 17 are configured such that a body part to which vibration is applied is predetermined. It is known that distribution of tactile receptors differs depending on a body part. For example, distribution of tactile receptors in a ring finger and a little finger among fingers is less than in other fingers (see E.R. Kandel et al., Principles of neural science, fourth edition, McGraw-Hill, 2000, etc.). Therefore, it is preferable to use a vibrator with high output for the vibrator 17 that is assumed to be attached to a body part with such a small distribution of tactile receptors. For such a phenomenon, the vibration apparatus 15 having the above-described configuration can apply vibrators with different outputs according to a difference in distribution of tactile receptors among the plurality of vibrators 17. Therefore, the vibration apparatus 15 can reduce a load on a drive power supply while manifesting a stochastic resonance phenomenon in any body part.

In addition, the vibration apparatus 15 of the first embodiment further comprises an acceleration sensor 19, and vibration start and vibration stop of the vibrator 17 are switched based on acceleration detected by the acceleration sensor 19. By continuing to apply weak vibration to a body part, a phenomenon called adaptation occurs, and a response of the body part to a stimulus decreases. Therefore, it is predicted that a possibility of manifestation of a stochastic resonance phenomenon decreases by continuing vibration of the vibrator 17. For such a phenomenon, the vibration apparatus 15 having the above-described configuration can vibrate a body part in a situation in which improvement of motor function for non-therapeutic purposes is desired, and can stop vibration in situations other than the situation. Therefore, the vibration apparatus 15 can effectively manifest a stochastic resonance phenomenon in a necessary situation.

In addition, the vibration apparatus 15 of the first embodiment further comprises an acquisition unit 20 configured to acquire information, and a memory 21 configured to store an intensity of vibration according to a body part acquired by the acquisition unit 20. Vibration intensity suitable for manifesting a stochastic resonance phenomenon may also vary depending on a user. For such a phenomenon, the vibration apparatus 15 having the above-described configuration can vibrate with a vibration intensity according to a body part of the user even in response to the user being a new user, and thus can manifest a stochastic resonance phenomenon for various users.

Next, a vibration apparatus according to a second embodiment of the present disclosure will be described. In the second embodiment, a target in which a vibration apparatus is provided is different from the first embodiment. Hereinafter, the second embodiment will be described focusing on differences from the first embodiment. The same reference signs are assigned to parts having the same configuration as the first embodiment.

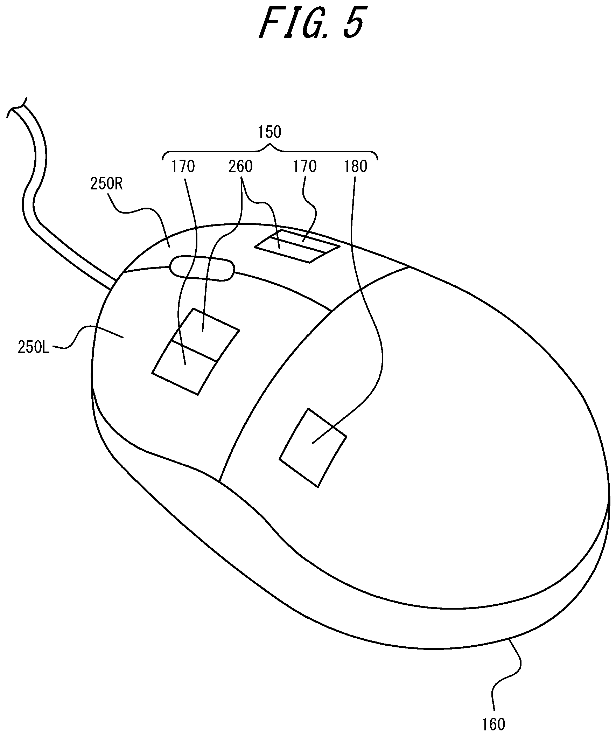

As illustrated in FIG. 5, a vibration apparatus 150 according to the second embodiment may be provided in a mouse 160.

Similarly to the first embodiment, the vibration apparatus 150 is configured to include at least one vibrator 170. Similarly to the first embodiment, the vibration apparatus 150 provided in the mouse 160 may be configured to include a plurality of vibrators 170. More specifically, the vibration apparatus 150 may be configured to include two vibrators 170 provided in a right button 250R and a left button 250L, respectively. The vibration apparatus 150 may further be configured to include a control apparatus 180 and a contact sensor 260.

Similarly to the first embodiment, the vibrator 170 applies vibration to a body part of a user. Similarly to the first embodiment, the body part to which the vibrator 170 applies vibration is a finger. Each of the plurality of vibrators 170 of the vibration apparatus 150 provided in the mouse 160 is configured such that a body part to which vibration is applied, in other words, a finger, is predetermined. For example, one of the two vibrators 170 is provided in the right button 250R, and the other is provided in the left button 250L.

Similarly to the first embodiment, the vibrator 170 may be capable of vibrating with various intensities. Similarly to the first embodiment, the vibrator 170 may vibrate with a determined intensity based on control of the control apparatus 180 as will be described later. Similarly to the first embodiment, the determined intensity may be less than a threshold of sensation of a human body.

The contact sensor 260 may be separately provided in the right button 250R and the left button 250L. The contact sensor 260 may be provided so as to partially overlap the vibrator 170. The contact sensor 260 may detect contact of a user with the vibrator 170 provided in an overlapping manner. The contact sensor 260 may be a pressure sensor, a temperature sensor, or the like.

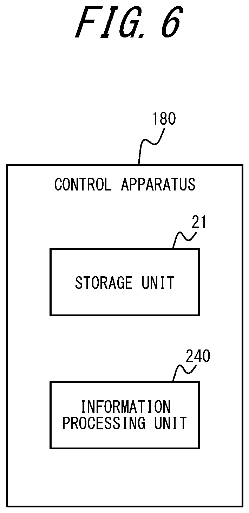

As illustrated in FIG. 6, the control apparatus 180 may include, for example, a memory 21 and an processor 240. A configuration and a function of the memory 21 are the same as those of the first embodiment. A structure of the processor 240 is the same as that of the first embodiment.

In the second embodiment, the control apparatus 180 may acquire electric power from a terminal apparatus to which the mouse 160 is connected. In addition, the control apparatus 180 may acquire information from the terminal apparatus. The control apparatus 180 may acquire, for example, an intensity of vibration according to a body part of a user from the terminal apparatus. For example, in the second embodiment, the control apparatus 180 may acquire, as information, an intensity of vibration for each of an index finger and a middle finger.

Similarly to the first embodiment, in response to an operation mode being switched to a setting mode, the processor 240 may acquire information from a terminal apparatus to which the mouse 160 is connected. For example, by executing an application configured to perform setting of the mouse 160 in the terminal apparatus, the processor 240 may switch the operation mode to the setting mode. The processor 240 may store, in the memory 21, an intensity of vibration according to a body part of a user acquired from the terminal apparatus in the setting mode as information.

Similarly to the first embodiment, the processor 240 vibrates the vibrator 170 with an intensity of vibration changed according to a body part to which vibration is applied. Similarly to the first embodiment, the processor 240 reads, from the memory 21, an intensity of vibration according to a finger corresponding to each of the plurality of vibrators 170, and vibrates each vibrator 170 with the intensity of vibration.

The processor 240 may vibrate the vibrator 170 for which the contact sensor 260 detects contact. In response to contact being released from the contact sensor 260 for which contact has been detected, the processor 240 may stop vibration of the vibrator 170.

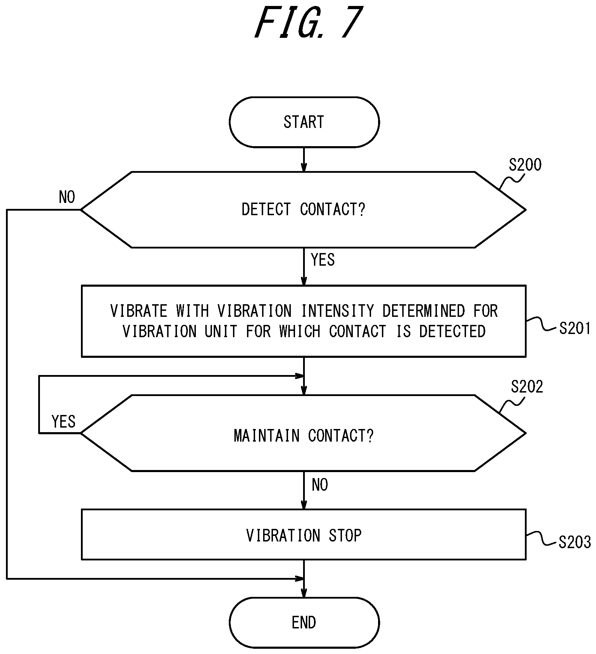

Next, vibration processing executed by the processor 240 in the second embodiment will be described using a flowchart of FIG. 7. The vibration processing starts, for example, periodically.

In step S200, the processor 240 determines whether or not any of the contact sensors 260 is detecting contact of a body part. In response to detecting contact, the process proceeds to step S201. In response to not detecting contact, the vibration processing ends.

In step S201, the processor 240 identifies the contact sensor 260 that has detected contact. Further, the processor 240 reads, from the memory 21, an intensity of vibration corresponding to the vibrator 170 in contact with the identified contact sensor 260. The processor 240 starts vibration of the vibrator 170 with the vibration intensity read from the memory 21. After the vibration start, the process proceeds to step S202.

In step S202, the processor 240 determines whether or not contact with the contact sensor 260 that has detected contact is maintained. In response to contact being maintained, the process repeats step S202. In response to contact being released, the process proceeds to step S203.

In step S203, the processor 240 stops vibration of the vibrator 170. After the stop, the vibration processing ends.

The vibration apparatus 150 of the second embodiment configured as described above also comprises at least one vibrator 170 configured to apply vibration to a body part of a user, and the vibrator 170 is configured to vibrate with an intensity of vibration changed according to the body part to which the vibration is applied. Therefore, the vibration apparatus 150 can also improve motor function based on sensory sensitivity utilizing a stochastic resonance phenomenon.

The vibration apparatus 150 provided in the mouse 160 can improve precision of operation by improvement of motor function for non-therapeutic purposes in, for example, a specific operation. The specific operation is, for example, a plurality of operations that are recognized separately according to a difference in duration and timing of a click on the left button 250L of the mouse 160 in a terminal apparatus in which the mouse 160 is used. For example, movement, copying, creation of a shortcut, display of a menu, or the like of a file or the like to be clicked, which is switched and recognized according to a length of a duration of a click. Alternatively, the specific operation is, for example, an operation that is recognized such that a density of a line in drawing software changes according to a length of a duration of a click.

Next, a vibration apparatus according to a third embodiment of the present disclosure will be described. In the third embodiment, a target in which a vibration apparatus is provided is different from the first embodiment. Hereinafter, the third embodiment will be described focusing on differences from the first embodiment. The same reference signs are assigned to parts having the same configuration as the first embodiment.

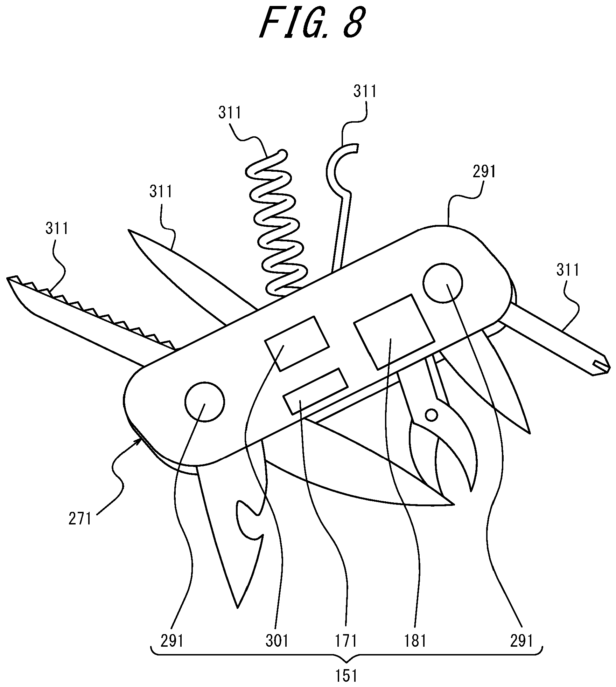

As illustrated in FIG. 8, a vibration apparatus 151 according to the third embodiment may be provided in a tool to be gripped by a finger. The tool to be gripped is, for example, an army knife 271.

Similarly to the first embodiment, the vibration apparatus 151 is configured to include at least one vibrator 171. Unlike the first embodiment, the vibration apparatus 151 provided in the army knife 271 may be configured to include a single vibrator 171. More specifically, the vibration apparatus 151 may be configured to include a single vibrator 171 provided in a handle 281 of the army knife 271. The vibration apparatus 151 may further be configured to include a control apparatus 181, a determination sensor 291, and an IMU sensor 301.

Similarly to the first embodiment, the vibrator 171 applies vibration to a body part of a user. Similarly to the first embodiment, the body part to which the vibrator 171 applies vibration is a finger. Similarly to the first embodiment, the vibrator 171 may be capable of vibrating with various intensities. Similarly to the first embodiment, the vibrator 171 may vibrate with a determined intensity based on control of the control apparatus 181 as will be described later. Similarly to the first embodiment, the determined intensity may be less than a threshold of sensation of a human body.

The determination sensor 291 may determine which tool 311 among a plurality of tools 311 included in the army knife 271 is in a usable state. Each of the plurality of tools 311 may be accommodatable in the handle 281. The plurality of tools 311 may be pivotally supported by a support shaft inside the handle 281. The plurality of tools 311 may be accommodatable in the handle 281 or drawable to an outside of the handle 281 by rotating around the support shaft. The determination sensor 291 is, for example, a rotation sensor configured to detect a rotation state of each tool 311. Based on a detection result of the rotation sensor, a tool 311 drawn to the outside of the handle 281 may be determined to be usable.

The IMU sensor 301 may include a three-axis acceleration sensor and a three-axis gyro sensor. A behavior of the vibration apparatus 151 may be detected based on acceleration of each of three axes and angular velocity of three axes detected by the IMU sensor 301.

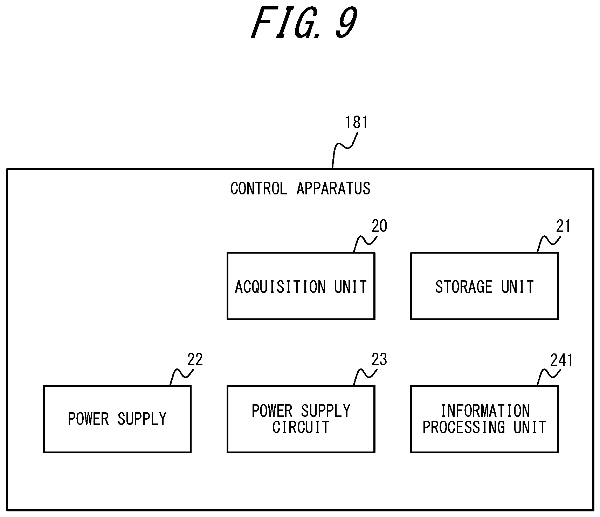

As illustrated in FIG. 9, the control apparatus 181 may include an acquisition unit 20, a memory 21, a power supply 22, a power supply circuit 23, and an processor 241. In the third embodiment, a structure and a function of the acquisition unit 20, the memory 21, the power supply 22, and the power supply circuit 23 are the same as those of the first embodiment. A structure of the processor 241 is the same as that of the first embodiment.

Similarly to the first embodiment, in response to an operation mode being switched to a setting mode, the processor 241 may control the acquisition unit 20 to be capable of acquiring information. Similarly to the first embodiment, the processor 241 may store, in the memory 21, an intensity of vibration according to a body part of a user acquired by the acquisition unit 20 in the setting mode as information. Similarly to the first embodiment, in response to a determined operation input to a button being performed in the setting mode, the processor 241 may cancel the setting mode.

Alternatively, in a configuration in which the acquisition unit 20 does not include a button, in response to it being estimated that the vibration apparatus 15 has been shaken five times based on a behavior detected by the IMU sensor 301, the processor 241 may switch the operation mode to the setting mode. Alternatively, in response to a specific tool 311 being switched to be usable in order within a time determined for determination based on a detection result of the determination sensor 291, the processor 241 may switch the operation mode to the setting mode.

Unlike the first embodiment, the processor 241 may estimate a body part to which vibration is applied, specifically, which finger, based on a usable tool 311 detected by the determination sensor 291. A finger that grips the handle 281 generally differs depending on a type of tool 311 to be used. Therefore, the processor 241 may estimate a finger that is assumed to grip the handle 281 for a usable tool 311 as a finger to which vibration is applied. The processor 241 may perform estimation by reading, from the memory 21, a table indicating a correspondence between each tool 311 and a finger that is assumed to be gripped.

In addition, unlike the first embodiment, the processor 241 may estimate a body part to which vibration is applied, specifically, which finger, based on a behavior of the vibration apparatus 151 detected by the IMU sensor 301. In some tools 311 among the plurality of tools 311, a finger that grips the handle 281 may change according to a behavior. Therefore, the processor 241 may estimate a finger that grips the handle 281 according to a behavior together with a usable tool 311. The processor 241 may perform estimation by reading, from the memory 21, a table indicating a correspondence among each tool 311, a behavior, and a finger that is assumed to be gripped. In a configuration in which a tool to be gripped in which the vibration apparatus 151 is provided includes a single tool 311, the processor 241 may estimate a finger that grips the handle 281 according to a behavior of the vibration apparatus 151.

The processor 241 vibrates the vibrator 171 with an intensity of vibration changed according to a finger that grips the handle 281. In this manner, the vibrator 171 may change a vibration intensity at which the vibrator 171 is vibrated based on at least one of a usable tool 311 and a behavior of the vibration apparatus 151. The processor 241 may change a vibration intensity at which the vibrator 171 is vibrated by reading, from the memory 21, a table indicating a correspondence between a finger that grips the handle 281 and an intensity of vibration.

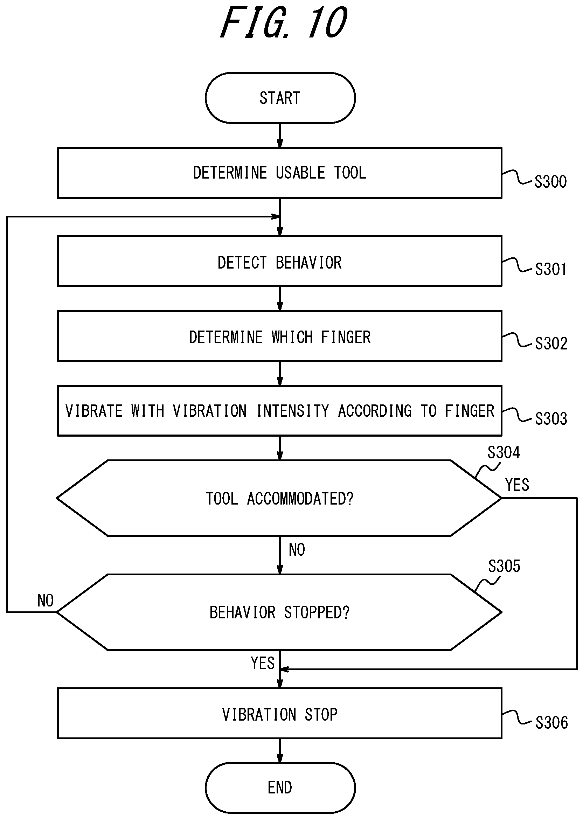

Next, vibration processing executed by the processor 241 in the third embodiment will be described using a flowchart of FIG. 10. The vibration processing starts, for example, in response to it being determined that any of the tools 311 is usable based on a detection result of the determination sensor 291.

In step S300, the processor 241 determines a usable tool 311. After the determination, the process proceeds to step S301.

In step S301, the processor 241 detects a behavior of the vibration apparatus 151 from a detection result of the IMU sensor 301. After the detection, the process proceeds to step S302.

In step S302, the processor 241 determines which finger is a finger that grips the handle 281 based on the tool 311 determined in step S300 and the behavior detected in step S301. After the determination, the process proceeds to step S303.

In step S303, the processor 241 starts vibration of the vibrator 171 with a vibration intensity according to the finger determined in step S302. After the vibration start, the process proceeds to step S304.

In step S304, the processor 241 determines whether or not the tool 311 is accommodated in the handle 281. In response to the tool 311 not being accommodated, the process proceeds to step S305. In response to the tool 311 being accommodated, the process proceeds to step S306.

In step S305, the processor 241 determines whether or not a behavior of the vibration apparatus 151 is in a stopped state. In response to not being in the stopped state, the process proceeds to step S301. In response to being in the stopped state, the process proceeds to step S306.

In step S306, the processor 241 stops vibration of the vibrator 171. After the vibration stop, the vibration processing ends.

The vibration apparatus 151 of the third embodiment configured as described above also comprises at least one vibrator 171 configured to apply vibration to a body part of a user, and the vibrator 171 is configured to vibrate with an intensity of vibration changed according to the body part to which the vibration is applied. Therefore, the vibration apparatus 151 can also improve motor function based on sensory sensitivity utilizing a stochastic resonance phenomenon.

In addition, the vibration apparatus 151 of the third embodiment also further comprises an acquisition unit 20 configured to acquire information, and a memory 21 configured to store an intensity of vibration according to a body part acquired by the acquisition unit 20. Therefore, the vibration apparatus 151 can also vibrate with a vibration intensity according to a body part of the user even in response to the user being a new user, and thus can manifest a stochastic resonance phenomenon for various users.

Next, a vibration apparatus according to a fourth embodiment of the present disclosure will be described. In the fourth embodiment, a target in which a vibration apparatus is embodied is different from the first embodiment. Hereinafter, the fourth embodiment will be described focusing on differences from the first embodiment. The same reference signs are assigned to parts having the same configuration as the first embodiment.

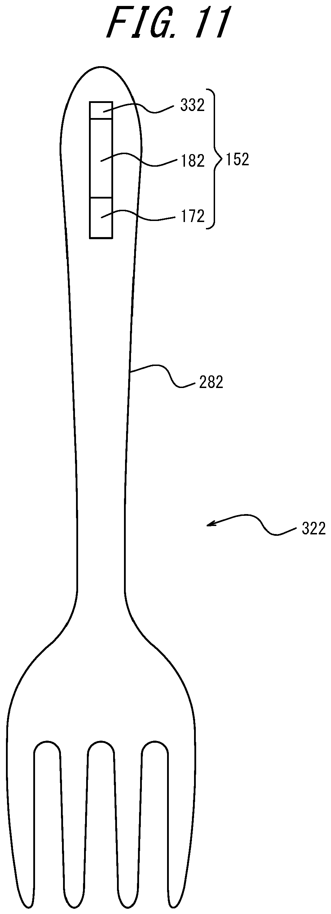

As illustrated in FIG. 11, a vibration apparatus 152 according to the fourth embodiment may be provided in a tableware tool 322 such as a fork.

Similarly to the first embodiment, the vibration apparatus 152 is configured to include at least one vibrator 172. Unlike the first embodiment, the vibration apparatus 152 provided in the tableware tool 322 may be configured to include a single vibrator 172. More specifically, the vibration apparatus 152 may be configured to include a single vibrator 172 provided in a handle 282 of the tableware tool 322. The vibration apparatus 152 may further be configured to include a control apparatus 182 and an acceleration sensor (first acceleration sensor) 332.

Similarly to the first embodiment, the vibrator 172 applies vibration to a body part of a user. Similarly to the first embodiment, the body part to which the vibrator 172 applies vibration is a finger. Similarly to the first embodiment, the vibrator 172 may be capable of vibrating with various intensities. Similarly to the first embodiment, the vibrator 172 may vibrate with a determined intensity based on control of the control apparatus 182 as will be described later. Similarly to the first embodiment, the determined intensity may be less than a threshold of sensation of a human body.

The acceleration sensor 332 may be capable of detecting acceleration along each of three axes determined in the control apparatus 182.

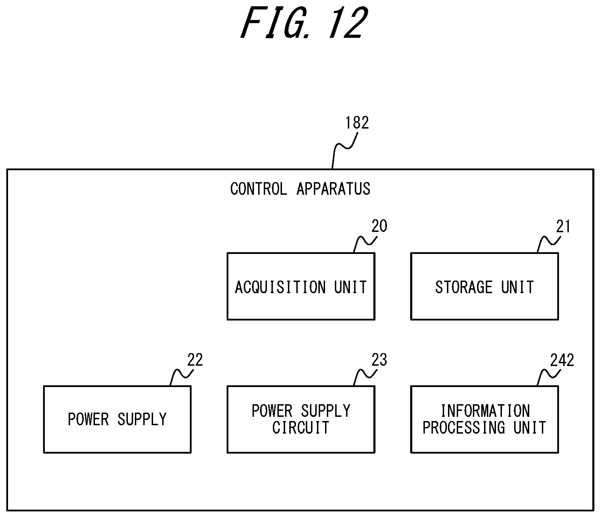

As illustrated in FIG. 12, the control apparatus 182 may include, for example, an acquisition unit 20, a memory 21, a power supply 22, a power supply circuit 23, and an processor 242. In the fourth embodiment, a structure and a function of the acquisition unit 20, the memory 21, the power supply 22, and the power supply circuit 23 are the same as those of the first embodiment. A structure of the processor 242 is the same as that of the first embodiment.

Similarly to the first embodiment, in response to an operation mode being switched to a setting mode, the processor 242 may control the acquisition unit 20 to be capable of acquiring information. Similarly to the first embodiment, the processor 242 may store, in the memory 21, an intensity of vibration according to a body part of a user acquired by the acquisition unit 20 in the setting mode as information. Similarly to the first embodiment, in response to a determined operation input to a button being performed in the setting mode, the processor 242 may cancel the setting mode.

Unlike the first embodiment, the processor 242 may estimate an orientation of the vibration apparatus 152 with respect to a vertical direction based on acceleration detected by the acceleration sensor 332. The processor 242 may change a vibration intensity at which the vibrator 172 is vibrated based on the estimated orientation. Specifically, the processor 242 may determine whether a hand that grips the tableware tool 322 is a right hand or a left hand based on the estimated orientation. The processor 242 may vibrate the vibrator 172 with a vibration intensity according to the determined hand. In a configuration in which the tableware tool 322 is a fork, in response to an orientation of the vibration apparatus 152 corresponding to a direction in which the tableware tool 322 is directed upward, the processor 242 may determine that the tableware tool 322 is gripped by a right hand. A direction in which the tableware tool 322 is directed upward is a direction in which a concave surface of curved teeth of the fork is directed vertically upward. In addition, in response to an orientation of the vibration apparatus 152 corresponding to a direction in which the tableware tool 322 is directed downward, the processor 242 may determine that the tableware tool 322 is gripped by a left hand. A direction in which the tableware tool 322 is directed downward is a direction in which a concave surface of curved teeth of the fork is directed vertically downward.

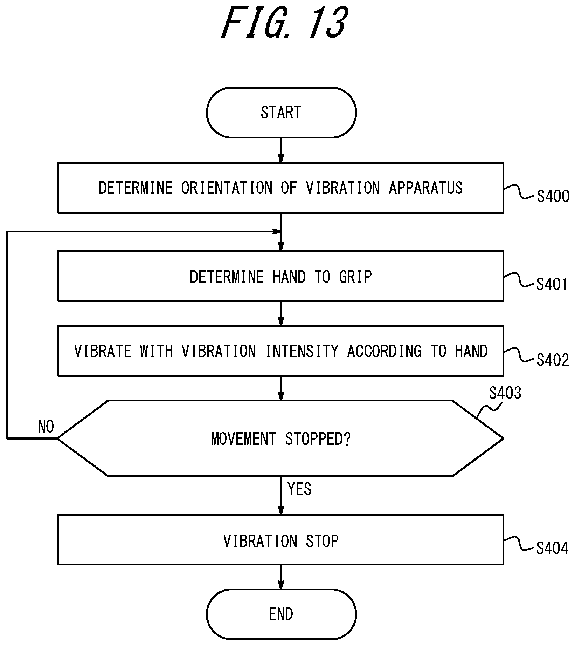

Next, vibration processing executed by the processor 242 in the fourth embodiment will be described using a flowchart of FIG. 13. The vibration processing starts, for example, in response to the acceleration sensor 332 detecting movement of the vibration apparatus 152. Movement of the vibration apparatus 152 means a state in which the vibration apparatus 152 is being moved from a state in which the vibration apparatus 152 is stopped together with the tableware tool 322.

In step S400, the processor 242 determines an orientation of the vibration apparatus 152. After the determination, the process proceeds to step S401.

In step S401, the processor 242 determines whether a hand that grips the tableware tool 322 is a right hand or a left hand based on the orientation of the vibration apparatus 152 determined in step S400. After the determination, the process proceeds to step S402.

In step S402, the processor 242 starts vibration of the vibrator 172 with a vibration intensity according to the hand determined in step S401. After the vibration start, the process proceeds to step S403.

In step S403, the processor 242 determines whether or not the vibration apparatus 152 has stopped movement based on acceleration detected by the acceleration sensor 332. In response to not having stopped, the process proceeds to step S401. In response to having stopped, the process proceeds to step S404.

In step S404, the processor 242 stops vibration of the vibrator 172. After the vibration stop, the vibration processing ends.

The vibration apparatus 152 of the fourth embodiment configured as described above also comprises at least one vibrator 172 configured to apply vibration to a body part of a user, and the vibrator 172 is configured to vibrate with an intensity of vibration changed according to the body part to which the vibration is applied. Therefore, the vibration apparatus 152 can also improve motor function based on sensory sensitivity utilizing a stochastic resonance phenomenon.

In addition, the vibration apparatus 152 of the fourth embodiment also further comprises an acquisition unit 20 configured to acquire information, and a memory 21 configured to store an intensity of vibration according to a body part acquired by the acquisition unit 20. Therefore, the vibration apparatus 152 can also vibrate with a vibration intensity according to a body part of the user even in response to the user being a new user, and thus can manifest a stochastic resonance phenomenon for various users.

### EXAMPLES

In order to demonstrate that vibration intensity that effectively manifests a stochastic resonance phenomenon differs according to a body part to be vibrated, a motor function confirmation experiment was performed using the above-described measurement apparatus 10.

In the motor function confirmation experiment, vibration intensity determined according to each finger using the above-described measurement apparatus 10 was measured as optimal vibration intensity for manifesting a stochastic resonance phenomenon. In the motor function confirmation test, the stimulation vibrator 11 was attached between a first joint and a second joint of a finger of a subject.

First, the signal vibrator 12 was driven with a current comprising white noise. Next, the stimulation vibrator 11 was driven. This drive current may be white noise or may be a sine wave having a specific frequency (see Patent Application No. 2023-139301). In response to driving the stimulation vibrator 11 with an arbitrary vibration intensity, the subject was caused to touch the signal vibrator 12. In response to maintaining a state in which the signal vibrator 12 is touched, a drive current of the signal vibrator 12 was increased or decreased. A minimum vibration intensity drive current at which the subject is capable of perceiving vibration of the signal vibrator 12 was determined as a threshold for the arbitrary vibration intensity of the stimulation vibrator 11.

Next, a vibration intensity (drive current) at which the stimulation vibrator 11 is driven was changed, and a threshold was determined in the same manner as described above. As an arbitrary vibration intensity of the stimulation vibrator 11, the vibration intensity was increased stepwise from 0 until the subject is capable of perceiving vibration of the stimulation vibrator 11, and a threshold for each vibration intensity of the stimulation vibrator 11 was determined.

A minimum value among thresholds respectively determined for a plurality of vibration intensities for the stimulation vibrator 11 was determined as optimal vibration intensity of a finger on which the stimulation vibrator 11 is attached.

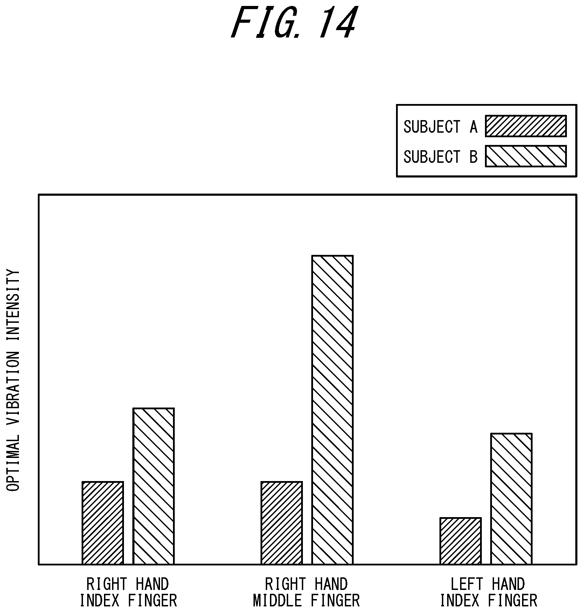

The above motor function confirmation test was performed on an index finger of a right hand and a left hand and a middle finger of a right hand of two subjects. Test results are illustrated in FIG. 14.

In one embodiment, (1) a vibration apparatus comprises:
at least one vibrator configured to apply vibration to a body part of a user,
wherein the vibrator is configured to vibrate with an intensity of vibration changed according to the body part to which the vibration is applied.

(2) In the vibration apparatus of (1) above,
the at least one vibrator includes a plurality of vibrators, and
the plurality of vibrators are configured such that a body part to which vibration is applied is predetermined.

(3) In the vibration apparatus of (2) above,
the vibration apparatus further comprises a contact sensor configured to detect contact with each of the plurality of vibrators, and
the vibrator for which the contact sensor detects contact is vibrated.

(4) In the vibration apparatus of (1) above,
the vibration apparatus further comprises a first acceleration sensor,
an orientation of the vibration apparatus with respect to a vertical direction is estimated based on acceleration detected by the first acceleration sensor, and the vibrator is configured to change an intensity of vibration based on the estimated orientation.

(5) In the vibration apparatus of (1) above,
the vibration apparatus further comprises an IMU sensor, and
the vibrator is configured to change an intensity of vibration based on a behavior of the vibration apparatus detected by the IMU sensor.

(6) In the vibration apparatus of (1) or (5) above,
the vibration apparatus further comprises a determination sensor configured to determine a usable tool in an army knife in which the vibration apparatus is provided, and
the vibrator is configured to change an intensity of vibration based on a usable tool detected by the determination sensor.

(7) In the vibration apparatus of any one of (1) to (6) above,
the vibration apparatus further comprises a second acceleration sensor, and
vibration start and vibration stop of the vibrator are switched based on acceleration detected by the second acceleration sensor.

(8) In the vibration apparatus of any one of (1) to (7) above,
the vibration apparatus further comprises:
an acquisition unit configured to acquire information; and
a memory configured to store an intensity of vibration according to the body part acquired by the acquisition unit, and
the vibrator is configured to vibrate with an intensity of vibration stored in the memory.

In one embodiment, (9) a vibration system comprises:
a vibration apparatus comprising at least one vibrator configured to apply vibration to a body part of a user; and
a control apparatus configured to vibrate the vibration apparatus with an intensity of vibration changed according to the body part.

Although embodiments of the vibration apparatuses 15, 150, 151, 152 have been described above, drawings for describing embodiments according to the present disclosure are schematic. Dimensional ratios and the like in the drawings do not necessarily match actual ones.

Although embodiments according to the present disclosure have been described based on various drawings and examples, it should be noted that a person skilled in the art is capable of performing various modifications or alterations based on the present disclosure. Therefore, it should be noted that these modifications or alterations are included in a scope of the present disclosure. For example, functions and the like included in each component and the like are rearrangeable so as not to be logically contradictory, and a plurality of components and the like are combinable into one or divisible.

All components described in the present disclosure and/or all methods disclosed or all steps of processing are combinable in any combination except for combinations in which these features are mutually exclusive. In addition, each of features described in the present disclosure is replaceable with an alternative feature that serves an identical purpose, an equivalent purpose, or a similar purpose unless explicitly denied. Therefore, unless explicitly denied, each of disclosed features is merely an example of a comprehensive series of identical or equivalent features.

Furthermore, embodiments according to the present disclosure are not limited to any specific configuration of the above-described embodiments. Embodiments according to the present disclosure are extendable to all novel features described in the present disclosure or combinations thereof, or all novel methods described or steps of processing or combinations thereof.

In the present disclosure, descriptions such as "first" and "second" are identifiers for distinguishing the configuration. Configurations distinguished by descriptions such as "first" and "second" in the present disclosure are capable of exchanging numbers in the configuration. For example, a first acceleration sensor is capable of exchanging identifiers "first" and "second" with a second acceleration sensor. Exchange of identifiers is performed simultaneously. The configuration is distinguished even after exchange of identifiers. Identifiers may be deleted. A configuration from which an identifier is deleted is distinguished by a reference sign. Based only on descriptions of identifiers such as "first" and "second" in the present disclosure, interpretation of an order of the configuration or a basis for existence of an identifier with a smaller number should not be used.

### REFERENCE SIGNS

10 measurement apparatus
11 stimulation vibrator
12 signal vibrator
13 terminal apparatus
14 plate member
15, 150, 151, 152 vibration apparatus
160 mouse
17, 170, 171, 172 vibrator
18, 180, 181, 182 control apparatus
19 acceleration sensor
20 acquisition unit
21 memory
22 power supply
23 power supply circuit
24, 241, 242, 243 processor
250L left button
250R right button
260 contact sensor
271 army knife
281, 282 handle
291 determination sensor
301 IMU sensor
311 tool
322 tableware tool
332 acceleration sensor

## Claims

1. A vibration apparatus comprising:
at least one vibrator configured to apply vibration to a body part of a user,
wherein the vibrator is configured to vibrate with an intensity of vibration changed according to the body part to which the vibration is applied.

2. The vibration apparatus according to claim 1, wherein
the at least one vibrator includes a plurality of vibrators, and
the plurality of vibrators are configured such that a body part to which vibration is applied is predetermined.

3. The vibration apparatus according to claim 2, further comprising:
a contact sensor configured to detect contact with each of the plurality of vibrators,
wherein the vibrator for which the contact sensor detects contact is vibrated.

4. The vibration apparatus according to claim 1, further comprising:
a first acceleration sensor,
wherein an orientation of the vibration apparatus with respect to a vertical direction is estimated based on acceleration detected by the first acceleration sensor, and the vibrator is configured to change an intensity of vibration based on the estimated orientation.

5. The vibration apparatus according to claim 1, further comprising:
an IMU sensor,
wherein the vibrator is configured to change the intensity of vibration based on a behavior of the vibration apparatus detected by the IMU sensor.

6. The vibration apparatus according to claim 1 or claim 5, further comprising:
a determination sensor configured to determine a usable tool in an army knife in which the vibration apparatus is provided,
wherein the vibrator is configured to change an intensity of vibration based on a usable tool detected by the determination sensor.

7. The vibration apparatus according to any one of claims 1 to 6, further comprising:
a second acceleration sensor,
wherein the vibration apparatus is configured to switch between starting and stopping the vibration of the vibrator based on an acceleration detected by the second acceleration sensor.

8. The vibration apparatus according to any one of claims 1 to 7, further comprising:
an acquisition unit configured to acquire information; and
a memory configured to store an intensity of vibration according to the body part acquired by the acquisition unit,
wherein the vibrator is configured to vibrate with an intensity of vibration stored in the memory.

9. A vibration system comprising:
a vibration apparatus comprising at least one vibrator configured to apply vibration to a body part of a user; and
a control apparatus configured to vibrate the vibration apparatus with an intensity of vibration changed according to the body part.
